# EUROPÄISCHE PATENTSCHRIFT

(11) **EP 2 410 200 B1**
(45) Veröffentlichungstag und Bekanntmachung des Hinweises auf die Patenterteilung: **20.02.2013**
(21) Anmeldenummer: 11185593.8
(22) Anmeldetag: 16.11.2010
(51) Int. Cl.: F16F 1/44, A47J 43/07

(54) **Standfuß, insbesondere für eine Tisch-Küchenmaschine**
Base, in particular for a table kitchen appliance
Pied de support, notamment pour une machine de cuisine sur table

(30) Priorität: 21.11.2009 DE 102009054201
(43) Veröffentlichungstag der Anmeldung: 25.01.2012
(62) Teilanmeldung aus: 10191350.7
(73) Patentinhaber: Vorwerk & Co. Interholding GmbH, 42275 Wuppertal (DE)
(72) Erfinder: Schomacher, Jutta, 42489 Wülfrath (DE); Dallmeier, Stephanie, 42279 Wuppertal (DE)
(74) Vertreter: Müller, Enno

(56) Entgegenhaltungen:
- DE-U1- 29 622 725
- GB-A- 587 164

## Beschreibung

Die Erfindung betrifft einen Standfuß, insbesondere für eine Tisch-Küchenmaschine, wobei die Küchenmaschine einen nach unten abragenden, gehäuseseitigen Fortsatz aufweist, der auf einem, eine Standfläche ausbildenden Elastomerteil aufsitzt und der Fortsatz mit dem Standteil über ein Elastomerteil verbunden ist, wobei das Elastomerteil sowohl in dem Fortsatz wie in dem Standteil festveranktert ist.

Standfüße insbesondere für Küchenmaschinen sind bekannt. Diese sind zur Abstützung der Küchenmaschine auf einer Fläche, insbesondere auf einer Tischfläche ausgelegt, wobei weiter bevorzugt über den Standfuß in der Küchenmaschine hervorgerufene Sprünge und Schwingungen reduziert werden. Hierbei besteht das Elastomerteil bevorzugt aus einem Gummimaterial oder aus einem thermoplastischen Elastomer.

Im Hinblick auf die Verankerung eines Tanks an einem Fahrzeug, für einen Transport von Flüssigkeit, ist es aus der GB 587 164 A bekannt, einen nach unten abragenden, gehäuseseitigen Fortsatz vorzusehen, der auf einem, die Standfläche ausbildenden Standteil aufsitzt und die Verbindung über ein Elastomerteil vorzunehmen. Die Teile sind gegeneinander verspannt, so dass keine Relativbewegung möglich ist.

Ausgehend von dem genannten Stand der Technik stellt sich der Erfindung die Aufgabe, einen Standfuß anzugeben, der insbesondere im Hinblick auf eine Küchenmaschine vorteilhaft ist.

Diese Aufgabe ist beim Gegenstand des Anspruches 1 gelöst, wobei darauf abgestellt ist, dass der Fortsatz an dem Standteil weiter über frei gegeneinander bewegliche Scheibenteile abgestützt ist. Anstelle einer Reibfläche zwischen Dornteil und Elastomerteil sind zusätzliche Scheiben angeordnet. Hierbei sind die zusätzlichen Funktionsflächen weiter bevorzugt aus einem unterschiedlichen Werkstoff als das Dornteil und das Elastomerteil gebildet, wobei die Reibkoeffizienten zwischen den einzelnen Reibpartner durch unterschiedliche Rautiefen und Beschichtungen eingestellt sind.

Bei Küchenmaschinen wird insbesondere bei einer Herstellung von Teigen dem sich drehenden Rührwerk durch die Zähigkeit des Teiges ein hoher Widerstand entgegengesetzt. Das erforderliche Antriebsdrehmoment des das Rührwerk antreibenden Motors wird über das Gehäuse der Küchenmaschine und die bevorzugt in einer Mehrzahl vorgesehenen Standfüße abgestützt. Ist beispielsweise die Teigkugel ungünstig im Topf angeordnet, bleibt das Rührwerk gegebenenfalls kurzzeitig im Teig stecken. Daraufhin wird das Drehmoment in kurzer Zeit erhöht. Dieser Momentenstoß wird durch den vorgeschlagenen Standfuß kompensiert.

Fortsatz und Standteil sind bevorzugt zur Absorption von Schwingungen und/oder Stößen in Horizontalrichtung oder in an einer horizontalen ausgerichteten Richtung relativ zueinander beweglich, wobei ein gegebener Reibungswiderstand zwischen Fortsatz und Standteil geringer gewählt ist als ein Reibungswiderstand zwischen Standteil und der insbesondere tischseitigen Aufsetzfläche für die Küchenmaschine. Zufolge der Anordnung des Elastomerteils ist eine Dämpfung der Verschiebebewegung zwischen Fortsatz und Standteil erreicht. Die Bewegung erfolgt entsprechend entgegen einer bevorzugten elastischen Rückstellfähigkeit des Elastomerteils, welche Rückstellfähigkeit weiterhin genutzt wird, um nach einer Auslenkung zufolge Schwingungen oder dgl. eine Rückstellung des Systems in eine Grundposition zu erreichen. Weiter ist durch das Elastomerteil das Standteil unverlierbar am gehäuseseitigen Fortsatz angebunden. Die Verankerung des Elastomerteiles sowohl in dem Fortsatz als auch in dem Standteil ist beispielsweise erreicht durch Verklebung oder Verschweißung, weiter beispielsweise durch Klemmen.

Der Fortsatz ist an dem Standteil weiter über frei gegeneinander bewegliche Scheibenteile abgestützt. Diese Scheibenteile sind paketartig zwischen den aufeinander zu weisenden Flächen von Fortsatz und Standteil positioniert. Es ergeben sich entsprechend eine Mehrzahl von Reibflächen, wobei die Flexibilität und damit insbesondere die horizontale Begrenzung und Beweglichkeit durch die Länge, Durchmesser und/oder Materialwahl auf die Bedürfnisse einstellbar ist. Zudem kann auch der Reibkoeffizient zwischen den Reibflächen (zwischen den Scheibenteilen und/oder zwischen Scheibenteil und Fortsatz und/oder zwischen Scheibenteil und Standteil) über das Material und die Oberflächengüte/Rauigkeit und Rautiefe eingestellt werden.

Als vorteilhaft erweist sich eine Ausgestaltung, bei welcher ein Scheibenteil als Ringteil ausgebildet ist, das das Elastomerteil umgibt. Entsprechend erstreckt sich das Elastomerteil in bevorzugter Ausgestaltung entlang einer insgesamt gebildeten vertikalen Mittenachse des so gestalteten Standfußes, diese Achse weiter bevorzugt aufnehmend. Das Elastomerteil durchsetzt das Scheibenteil, weiter bevorzugt das durch die Scheibenteile gebildete Paket, wobei jeweils endseitig eine Verankerung in dem Fortsatz bzw. in dem Standteil vorgesehen Ist. Hierzu ist weiter bevorzugt das Elastomerteil bandartig oder schnurartig gestaltet, wobei das so gebildete elastische Band die Reibflächen zu einer lose gebundenen Komponente verbindet und weiter eine elastische Rückstellfähigkeit der Gesamtkomponente bietet.

Die Kraftübertragung vom Fortsatz auf das Standteil erfolgt über die Scheibenteile, welche entsprechend in Art eines Puffers wirken. Das bevorzugt zentral durchgeführte Elastomerteil verhindert hierbei ein Abgleiten einzelner Scheibenteile aus der Zuordnungsstellung und bietet zugleich die Möglichkeit einer elastischen Rückstellung in eine Grundstellung.

Zufolge einer Verspannung des Fortsatzes gegen das Standteil wird das Elastomerteil bevorzugt auf Zug beansprucht. Entsprechend wird das Elastomerteil bei einer derartigen Verspannung gedehnt, aus welcher Dehnung heraus in bevorzugter Ausgestaltung eine Rückstellung der Gesamtkomponente in die Grundstellung erfolgt bzw. die Komponente oder auch nur einzelne Teile wie Scheibenteile in Richtung auf die Grundstellung tendenziell belastet sind.

Alle Zwischenwerte, insbesondere in 1 mm-Schritten und hinsichtlich einer ein-oder mehrfachen Einengung der angegebenen Bereichsgrenze in derselben Schrittweise, von oben und/ oder von unten, sind hiermit in die Offenbarung eingeschlossen.

Nachstehend ist die Erfindung anhand der beigefügten Zeichnung, welche lediglich vier Ausführungsbeispiele darstellt, näher erläutert. Es zeigt:
- Fig. 1: in perspektivischer Darstellung eine Tisch-Küchenmaschine mit Standfüßen zum Aufstellen der Küchenmaschine auf einer Tischfläche;
- Fig. 2: einen gerätebodenseitig angeordneten Standfuß in einer ersten Ausführungsform;
- Fig. 3: den Schnitt gemäß der Linie III-III in Fig. 2, eine unbelastete Grundstellung betreffend;
- Fig. 4: eine der Fig. 3 entsprechende Darstellung, jedoch in einer Belastungsstellung;
- Fig. 5: eine der Fig. 2 entsprechende Darstellung, jedoch eine zweite Ausführungsform betreffend;
- Fig. 6: den Schnitt gemäß der Linie VI-VI in Fig. 5;
- Fig. 7: eine Schnittdarstellung gemäß Fig. 6, eine belastete Stellung betreffend;
- Fig. 8: eine weitere der Fig. 2 entsprechende Darstellung, eine dritte Ausführungsform betreffend;
- Fig. 9: den Schnitt gemäß der Linie IX-IX in Fig. 8;
- Fig. 10: eine der Fig. 9 entsprechende Darstellung, eine Belastungsstellung betreffend;
- Fig. 11: eine der Fig. 2 entsprechende Darstellung, eine vierte Ausführungsform betreffend;
- Fig. 12: den Schnitt gemäß der Linie XII-XII in Fig. 11;
- Fig. 13: eine der Fig. 12 entsprechende Darstellung, jedoch im Zuge einer Belastung.

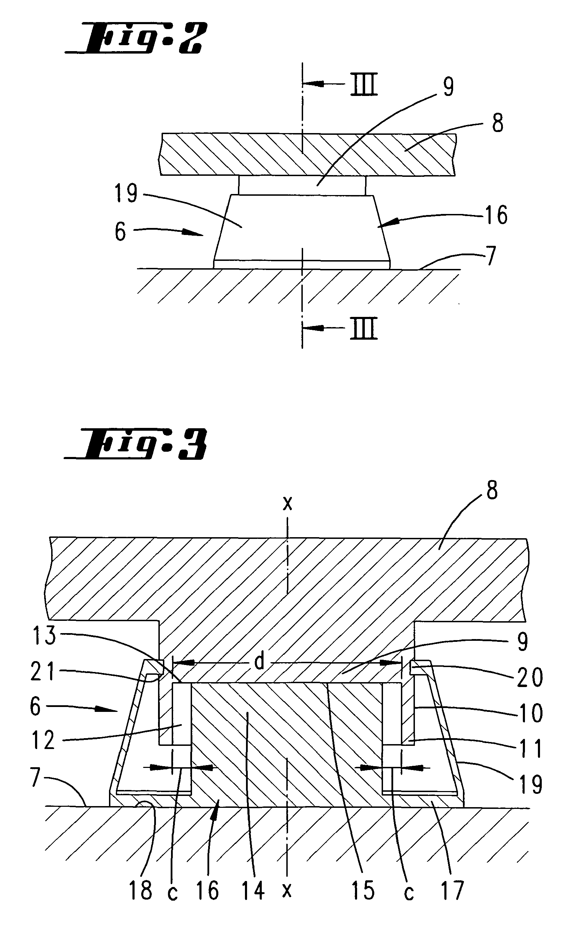

Die Figuren 3 bis 7 und 11 bis 13 stellen keine Ausführungsformen gemäß der Erfindung dar.

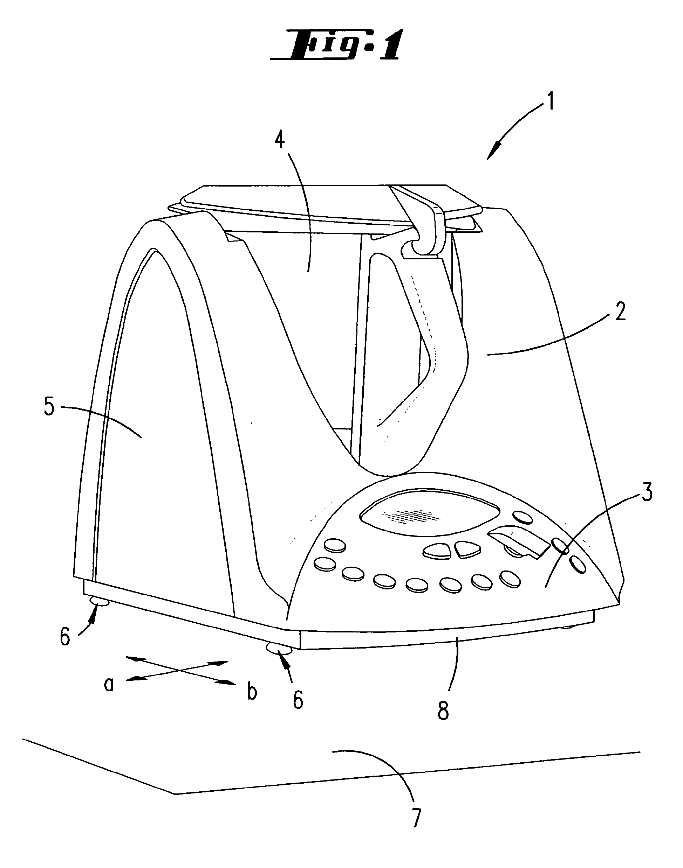

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührtopf 4 zugeordnet. Dieser sitzt in der Rührgefäß-Aufnahme 2 ein. In dem Rührtopf 4 ist zugeordnet einem Rührtopfboden, ein Rührwerk vorgesehen, welches über einen in der Küchenmaschine 1 unterhalb der Aufnahme 2 angeordneten, nicht dargestellten Elektroantrieb betrieben wird.

Das Gehäuse 5 der Küchenmaschine 1 stützt sich über Stützfüße 6 auf einer Fläche, hier auf einer Tischfläche 7 ab. Die Stützfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird über das Gehäuse 5 und die Stützfüße 6 abgestützt. Ist die Teigkugel ungünstig im Rührgefäß 4 angeordnet, bleibt das Rührwerk gegebenenfalls kurzzeitig im Teig stecken. Zufolge dessen wird das Drehmoment kurzzeitig erhöht. Dieser Momentenstoß wird von den Stützfüßen 6 kompensiert, so dass sich das Gerät nicht ruckartig und sprunghaft um seinen Schwerpunkt dreht.

Die Bewegung des Gehäuses 5 in horizontaler Richtung (vgl. Pfeile a und b in Fig. 1) wird zugelassen. Das Gehäuse 5 kann sich relativ zu den Stützfüßen 6 bzw., wie nachstehend näher erläutert, relativ zu einem Teilabschnitt der Stützfüße 6 in der horizontalen Ebene bewegen. Die sprungartig eingeleitete Energie wird in Reibung und/oder Rückstell- und Verformungsenergie umgewandelt. Die Stützfüße 6 sind hierbei weiter mit der Standfläche - hier der Tischfläche 7 - verbunden, insbesondere reibschlüssig verbunden.

Die Fig. 2 bis 4 zeigen eine erste Ausführungsform eines Stützfußes 6. Dieser ist grundsätzlich zweiteilig gestaltet, wobei ein Teil gehäusefest vorgesehen ist. Hierbei handelt es sich um einen Fortsatz 9, der gehäuseseitig, insbesondere gehäusebodenseitig angeformt ist und nach vertikal unten über die nach unten gerichtete Gehäusebodenfläche abragt. Der Fortsatz 9 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 um einen Hartkunststoff- oder Metallkörper handeln, der weiter bevorzugt mit Bezug auf eine zentrale den Fortsatz 9 durchsetzende Vertikalachse x rotationssymmetrisch ausgebildet ist. Neben der einstückigen Ausgestaltung ist alternativ ein Fortsatz 9 vorgesehen, der unterseitig am Gehäuseboden 8 festlegbar, beispielsweise einschraubbar ist.

Der Fortsatz 9 formt ein sich nach vertikal unten öffnendes Schalenteil 10 aus, dessen Außendurchmesser dem Außendurchmesser des Fortsatzes 9 entspricht. Die umlaufende Schalenwandung 11 begrenzt in Horizontalrichtung einen Schalenraum 12, wobei die Wandungsstärke in dem dargestellten Ausführungsbeispiel etwa 1/20 des Schalenteil-Außendurchmessers entspricht. Die vertikale Höhe der Schalenwandung 11 entspricht bevorzugt etwa 1/4 des Schalenteil-Außendurchmessers.

Der sich hieraus ergebende Schalenboden 13 erstreckt sich in einer quer zur Vertikalachse x gerichteten Ebene, weiter in einer Horizontalebene, die entsprechend parallel ausgerichtet ist zur Tischfläche 7.

In das Schalenteil 10, weiter in den Schalenraum 12 eingreifend ist ein Dornteil 14 vorgesehen. Auch hierbei handelt es sich bevorzugt um ein rotationssymmetrisches Bauteil mit einer vertikal nach oben weisenden Stirnfläche 15, die parallel ausgerichtet ist zum Schalenboden 13, entsprechend sich auch bevorzugt in einer Horizontalebene erstreckt.

Das Dornteil 14 ist Teil eines Elastomerteils 16. Letzteres weist einen Boden 17 auf, mit einer vertikal nach unten weisenden Standfläche 18 zur Abstützung auf der Tischfläche 7. Der Boden 17 ist in dem dargestellten Ausführungsbeispiel im Grundriss kreisrund als Scheibe ausgebildet, mit einem Durchmesser, der etwa dem 2-Fachen des Außendurchmessers des Dornteils 14 entspricht. Letzteres sitzt zentral auf dem Boden 17 und ist mit diesem verbunden, weiter bevorzugt materialeinheitlich und einstückig mit diesem verbunden.

Die vertikale Höhe des Dornteiles 14 ist so gewählt, dass das Schalenteil 10 in Zuordnungsstellung, d. h. in der Auflagestellung des Schalenbodens 13 auf der Stirnfläche 15 des Dornteils 14 freikragend endet, d. h. mit vertikalem Abstand zur zugewandten Oberfläche des elastomerteilseitigen Bodens 17 endet. So ist in dem dargestellten Ausführungsbeispiel eine vertikale Höhe des Dornteiles 14 gewählt, die etwa dem 2-Fachen der vertikalen Tiefe des Schalenteiles 10 bzw. der vertikalen Höhe der Schalenwandung 11 entspricht.

Das Dornteil 13 ist in dem Schalenteil 10 mit einem quer zu der Dornerstreckung verbleibenden Spiel aufgenommen, so dass eine relative Beweglichkeit des Schalenteils 10 bzw. des Fortsatzes 9 zu dem Dornteil 14 erreichbar ist. So entspricht in dem dargestellten Ausführungsbeispiel das verbleibende Spiel (Addition der sich beidseitig des Dornteiles 14 in Fig. 3 einstellenden Spielmaße c) zusammengefasst etwa 1/6 des freien Innendurchmessers d des Schalenteiles 10.

Außenseitig ist das Schalenteil 10 umfasst von einem Mantelabschnitt 19 des Elastomerteils 16. Letzterer ist an dem Boden 17 des Elastomerteils 16 entlang der Randkante angebunden und erstreckt sich hüllenartig unter konischer Verjüngung bei zunehmender vertikaler Beabstandung zum Boden 17 bis in den Übergangsbereich von Schalenteil 10 und Fortsatz 9. Hier ist der Mantelabschnitt 19 an dem Fortsatz 9 rastgehaltert, wozu eine entsprechende umlaufende Verdichtung 20 des Mantelabschnittes 19 in eine wandungsaußenseitig des Fortsatzes 9 vorgesehene Ringnut 21 eingreift.

Der Mantelabschnitt 19 ist insbesondere gegenüber dem Boden 17 verdünnt ausgebildet, weiter membranartig mit einer Materialstärke von 0,1 bis 0,5 mm.

Hieraus ergibt sich eine hohe Flexibilität des Mantelabschnittes 19. Letzterer ist zufolge der bevorzugt einheitlichen Elastomereigenschaften elastisch rückstellfähig eingestellt. Mittels des Mantelabschnittes 19 ist der Zusammenwirkungsbereich von Dornteil 14 und Schalenteil 10 beispielsweise vor Verschmutzungen geschützt. Zudem ist hierdurch eine unverlierbare Anbindung des Dornteiles 14 an den Fortsatz 9 gegeben.

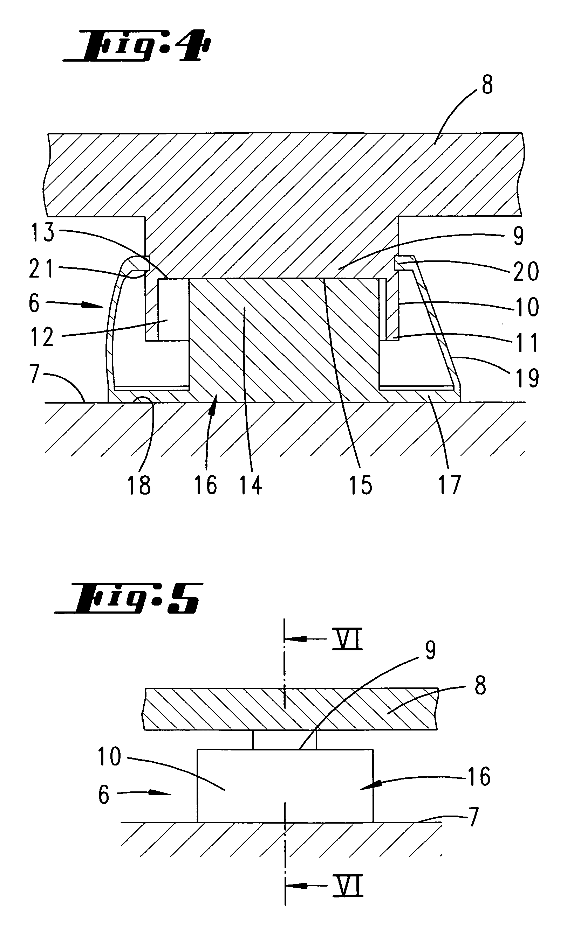

Zufolge der vorbeschriebenen Ausgestaltung eines Stützfußes 6 ist eine schwimmende Lagerung in der horizontalen Bewegungsrichtung a und b gegeben, wobei in vertikaler Bewegungsrichtung die Verbindung zwischen Fortsatz und Elastomerteil 16 steif gestaltet ist, so dass unterkritische Schwingungen, beispielsweise hervorgerufen durch eine Unwuchterregung, gut kompensiert werden können. Hierbei ist ein Abgleiten des Fortsatzes 9 relativ zu dem Dornteil 14 im Bereich der aufeinanderliegenden Flächen (Schalenboden 13 und Stirnfläche 15) erreichbar (vgl. Fig. 4), wobei die Horizontalbewegung zufolge der überlappenden Schalenwandung 11 begrenzt ist.

Hierbei ist der Reibungswiderstand zwischen Schalenboden und Stirnfläche 15 des Dornteiles 14 geringer als der Reibungswiderstand zwischen der Standfläche 18 des Elastomerteils 16 und der Tischfläche 7.

Der als dünne elastische Schicht ausgebildete Mantelabschnitt 19 beeinträchtigt hierbei nicht die Bewegung des Gehäuses 5 bzw. des an diesem fest angebrachten Fortsatzes 9, sondern dient lediglich zur Fixierung beim Hochheben und Tragen des Gerätes sowie zur Abdeckung des geschaffenen Hohlraums. Durch Aufhebung der Rastverbindung kann das Elastomerteil 16 leicht abgenommen werden und so separat gereinigt werden.

Zur Bildung des Elastomerteils 16 kommen bevorzugt Naturkautschuke oder synthetische Kautschuke wie beispielsweise Styrol-Butadien-Kautschuk zur Anwendung.

Die Fig. 5 bis 7 zeigen eine zweite Ausführungsform. Hier formt der gehäuseseitige Fortsatz 9 ein nach vertikal unten weisendes, starres Dornteil 14 aus, das in ein nach vertikal oben offenes Schalenteil 10 eintaucht. Das Schalenteil 10 ist hier als Elastomerteil 16 gebildet, mit einem mit seiner Standfläche 18 in der Nutzungsstellung auf der Tischfläche 7 aufliegenden Schalenboden 13 und einer bodenseitig, randseitig bevorzugt umlaufenden Schalenwandung 11, deren vertikale Höhe geringer bemessen ist als die des Dornteils 14. Letzteres stützt sich mit der vertikal nach unten weisenden Stirnfläche auf der zugewandten Oberfläche des Schalenbodens 13 ab.

Die Zusammenwirkung von dornteilseitiger Stirnfläche 15 und zugewandter Oberfläche des Schalenbodens 13 ist auch in diesem Ausführungsbeispiel in einer ebenen Fläche erreicht, weiter bevorzugt in einer Horizontalebene.

Das Schalenteil 10 weist in dem dargestellten Ausführungsbeispiel einen Innendurchmesser auf, der etwa dem 3-Fachen des Dornteildurchmessers entspricht. Demzufolge ist das Dornteil 14 auch hier mit einem horizontalen Spiel in dem Schalenteil 10 aufgenommen, so dass eine Relativverlagerung zufolge Stöße oder Schwingungen in der Küchenmaschine 1 erlaubt sind. Auch ist hierbei der Reibungswiderstand zwischen der dornteilseitigen Stirnfläche 15 und dem Schalenboden 13 geringer gewählt als zwischen der Standfläche 18 des Schalenbodens 13 und der Tischfläche 7, so dass das schalenartige Elastomerteil 16 auch bei Einleitung sprungartiger Energie mit der Tischfläche 7 verbunden bleibt.

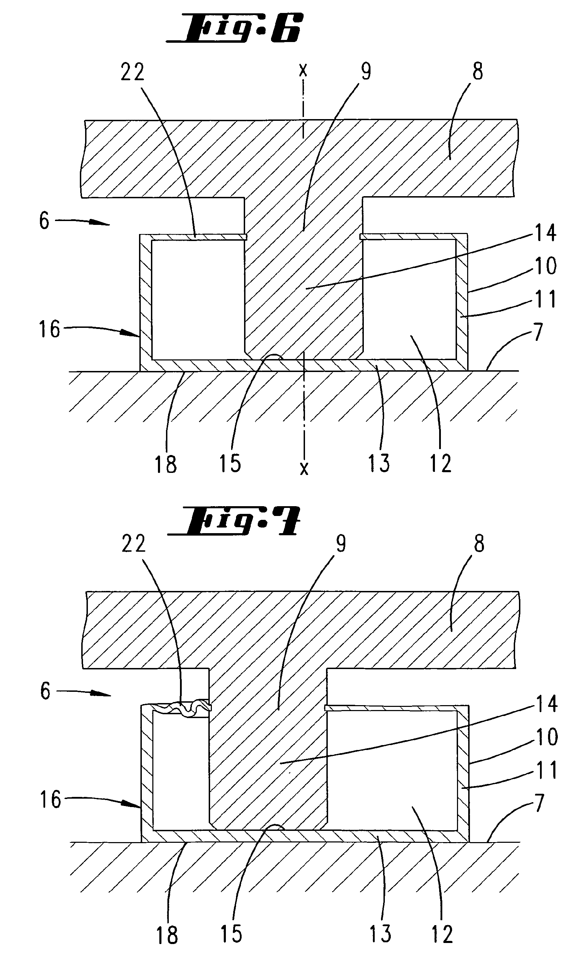

Der Schalenraum 12 ist überdeckt von einer vom Dornteil 14 durchsetzten Schalendecke 22. Diese ist, wie der Mantelabschnitt 19 der ersten Ausführungsform, gegenüber der Schalenwandung 11 hinsichtlich der Materialstärke verringert, zur Bildung der Schalendecke 22 in Art einer elastischen Membran. Diese Schalendecke 22 ist umlaufend im Bereich des freien nach vertikal oben ragenden Randes an der Schalenwandung 11 befestigt und weist in einer Grundausrichtung zentral eine Durchtrittsöffnung für das Dornteil 14 auf. Entlang des Randes der Durchtrittsöffnung ist die membranartige Schalendecke 22 beispielsweise durch Verkleben oder Verschweißen mit dem Dornteil 14 verbunden (vgl. Fig. 6).

Zufolge dieser Anordnung ist der Schalenraum 12 verschlossen. Durch die rückstellfähig elastische Ausgestaltung der Schalendecke 22 kann diese zufolge Dehnung bzw. Stauchung die Horizontalbewegung des Dornteiles 14 relativ zum Schalenteil 10 mit vollziehen (vgl. Fig. 7).

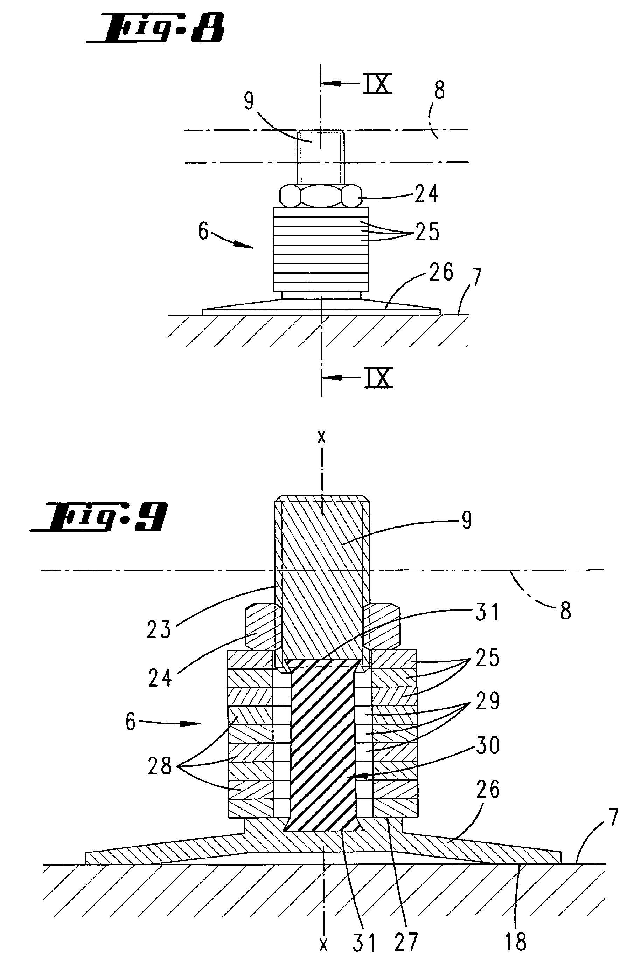

Eine weitere Ausführungsform zeigen die Fig. 8 bis 10. Auch in dieser Ausführungsform weist das Gehäuse 5 der Küchenmaschine 1 einen nach vertikal unten abragenden Fortsatz 9 auf. Dieser ist als Starrteil, insbesondere als Hartkunststoff- oder Metallteil ausgebildet, dies weiter zapfenartig rotationssymmetrisch.

Der Fortsatz 9 weist ein Außengewinde 23 auf. Auf dieses ist eine Schraubmutter 24 aufgedreht, über welche sich der Fortsatz 9 unter Zwischenschaltung von Scheibenteilen 25 auf einem die Standfläche 18 ausbildenden Standteil 26 abstützt. Letzteres ist zunächst tellerartig gestaltet mit einem Durchmesser, der einem Mehrfachen, in dem dargestellten Ausführungsbeispiel etwa einem 4-Fachen des Fortsatz-Durchmessers entspricht. Der mittige Bereich des Standteiles 26 ist gegenüber der Standfläche 18 erhaben, so dass sich die Standfläche 18 umlaufend randseitig des Standteiles 26 ergibt.

Der mittige erhabene Bereich des Standteiles 26 formt eine sich in einer Horizontalebene erstreckende Stützfläche 27.

Zwischen der fortsatzseitigen Schraubmutter 24 und der standteilseitigen Stützfläche 27 sind in dem dargestellten Ausführungsbeispiel neun flächig aufeinanderliegende Scheibenteile 25 gespannt. Diese Scheibenteile 25 sind als Ringteile 28 ausgebildet, weisen entsprechend jeweils eine zentrale Durchtrittsöffnung 29 auf. Hierbei ist der Durchmesser der Durchtrittsöffnung 29 angepasst an den Außendurchmesser des Fortsatzes 9, weiter bevorzugt diesen Außendurchmesser geringfügig übertreffend, so dass ein nach vertikal unten weisendes Ende des Fortsatzes 9 je nach Drehverlagerung der Schraubmutter 24 mehr oder weniger in eine oder mehrere Durchtrittsöffnungen 29 der Scheibenteile 25 eintaucht.

Die Scheibenteile 25 sind weiter bevorzugt gleichgestaltet, dies zunächst insbesondere hinsichtlich ihrer in Vertikalrichtung betrachteten Dicke als auch hinsichtlich ihrer Innen- und Außendurchmesser. Weiter sind die Scheibenteile 25 bevorzugt auch hinsichtlich der Materialwahl gleichgestaltet, wobei weiter die Scheibenteile 25 aus einem Hartkunststoff oder auch aus einem Metallwerkstoff bestehen.

Die Scheibenteile 25 sind im Bereich ihrer Durchtrittsöffnungen 29 durchsetzt von einem Elastomerteil 30. Hierbei handelt es sich um ein insgesamt schnurartiges Elastomerteil, das beidseitig endseitig verankert ist, nämlich zum einen im Bereich der in Richtung auf die Durchtrittsöffnungen 29 weisenden Stirnseite des Fortsatzes 9 und zum anderen in dem Mittenabschnitt des Standteiles 26. Zur Verankerung ist in dem dargestellten Ausführungsbeispiel die jeweilige Aufnahme 31 für das Elastomerteilende hinterschnitten. Entsprechend ist das Elastomerteil 30 so festgelegt, dass sich dieses auch unter üblicher Zugbeanspruchung nicht aus der jeweiligen Verankerung lösen kann.

Die übereinandergestapelten Scheibenteile 25 liegen plan mit ihren Reibflächen aufeinander, wobei diese zufolge der mittigen Durchsetzung mit dem Elastomerteil 39 horizontal flexibel übereinandergestapelt sind. Das als elastisches Band oder als elastische Schnur gebildete Elastomerteil 30 verbindet die Reibflächen zu einer lose gebundenen Komponente, wobei die Flexibilität und damit die horizontale Begrenzung und Beweglichkeit insbesondere durch die Länge, den Durchmesser und die Materialwahl der Scheibenteile 25 einstellbar ist.

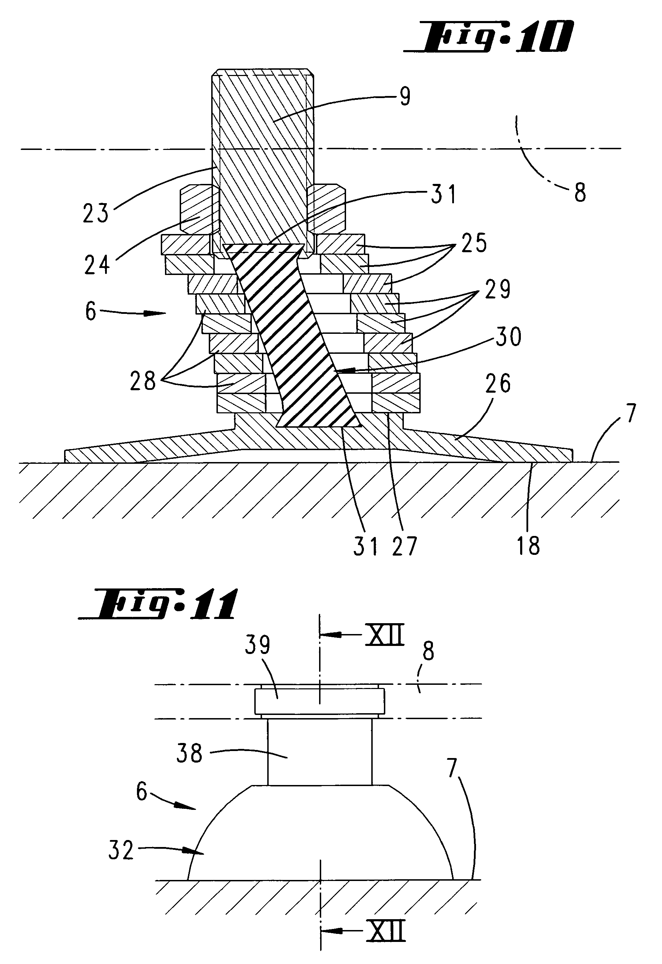

In Fig. 9 ist eine ideale Grundstellung des Stützfußes 6 dargestellt. Zufolge vorbeschriebener Belastungen in Horizontalrichtung (Pfeile a + b) ergibt sich eine unter Umständen ungleichmäßige Verlagerung der Scheibenteile 25 gemäß Fig. 10, wobei zufolge der Verspannung des Fortsatzes 9 gegen das Standteil 26 das Elastomerteil 30 auf Zug beansprucht wird. Das Elastomerteil 30 ist hierbei weiter bevorzugt so ausgelegt, dass über dieses eine Rückstellung in die Grundstellung gemäß Fig. 9 erreicht werden kann. Weiter wird jedoch im laufenden Betrieb der Küchenmaschine 1 immer wieder eine neue, zufällige Ausrichtung der Scheibenteile 25 zueinander sowie eine Ausrichtung des Fortsatzes 9 zu den Scheibenteilen 25 erreicht.

Die Schraubmutter 24 dient in erster Linie zur Verhinderung des Verlierens eines der Funktionselemente. Darüber hinaus ist über die Schraubmutter 24 eine Vorspannung der Funktionselemente erreichbar, um so die Reibungseigenschaften zu variieren. Das die Schraubmutter 24 tragende Außengewinde 23 dient bevorzugt weiter auch zur Festlegung des Fortsatzes 9 am Gehäuse 5, insbesondere am Gehäuseboden 8.

Eine weitere Ausführungsform zeigen die Fig. 11 bis 13. Hier ist der Stützfuß 6 einteilig, bevorzugt materialeinheitlich als Elastomerteil 32 gebildet. Dieses setzt sich zusammen aus einem nach vertikal oben offenen Schalenteil 33, dessen Schalenboden 34 unterseitig die Standfläche 35 bildet. Auch hierbei handelt es sich bevorzugt um ein rotationssymmetrisches Teil. Die entsprechend umlaufende, schalenbodenrandseitig angeordnete und sich nach vertikal oben erstreckende Schalenwandung weist eine vertikale Höhe auf, die etwa dem Außenradius des Schalenbodens 34 entspricht.

Radial außen geht die Schalenwandung 36 in eine, zur Auflage auf die Tischfläche 7 ausgelegte Stützwandung 37 über. Diese setzt am frei nach vertikal oben abragenden Ende der Schalenwandung 36 an und erstreckt sich in einem Querschnitt betrachtet kreisabschnittförmig bis zur Ebene der Standfläche 35, so dass sich insgesamt eine kalottenartige Form des Schalenteiles 33 einstellt.

Die nach vertikal oben weisende frei Randkante der Schalenwandung 36 definiert eine Austrittsebene. Durch diese tritt ein rohrartiger Verbindungsabschnitt 38. Dieser wurzelt fußseitig in dem Schalenboden 34 und ist bevorzugt materialeinheitlich, einteilig, mit diesem verbunden. Bei zentrischer Zuordnung des Verbindungsabschnittes 38 zum Schalenteil 33 weist der Verbindungsabschnitt 38 einen Außendurchmesser e auf, der in dem dargestellten Ausführungsbeispiel etwa dem 0,8-Fachen des geringsten freien Innendurchmessers des Schalenteiles 33 entspricht. Hieraus ergibt sich ein entsprechendes Abstandsmaß f zwischen der Außenwandung des Verbindungsabschnittes 38 und der Innenfläche der Schalenwandung, welches bevorzugt 1 bis 5mm beträgt.

Der rohrartige Verbindungsabschnitt 38 erstreckt sich über eine etwa dem 2-Fachen der vertikalen Höhe der Schalenwandung 36 entsprechende Länge und formt in dem über das Schalenteil 33 hinausragenden Endabschnitt einen Anbindungsbereich 39 aus. Dieser ist gebildet durch eine radiale Verdickung mittels welcher der so gebildete Stützfuß 6 an dem Gehäuseboden 8 festlegbar ist.

Bei dem vorbeschriebenen Stützfuß 6 wird die Stoßenergie in Rückstell- und Verformungsenergie umgewandelt, wobei das Elastomerteil 32 in Art einer Elastomerfeder wirkt. Durch die geometrische Gestaltung ist eine hohe Steifigkeit in vertikaler Richtung zufolge des zylindrisch ausgestalteten Verbindungsabschnittes 38 bei gleichzeitiger hoher Elastizität in horizontaler Richtung zufolge der Anbindung des Verbindungsabschnittes 38 an dem Schalenteil 33 realisiert.

Entsprechende Stöße werden zufolge Verformung bzw. Auslenken des Verbindungsabschnittes 38 aus der Vertikalachse heraus kompensiert, wobei die Schalenwandung 37 in Abhängigkeit von einer Auslenkung des Verbindungsabschnittes 38 gegebenenfalls eine zusätzliche Abstützung erbringt, in dem sich die Wandungsaußenseite des Verbindungsabschnittes 38 punktartig im Bereich der Austrittsebene an einem zugeordneten Randabschnitt der Schalenwandung 36 abstützt.

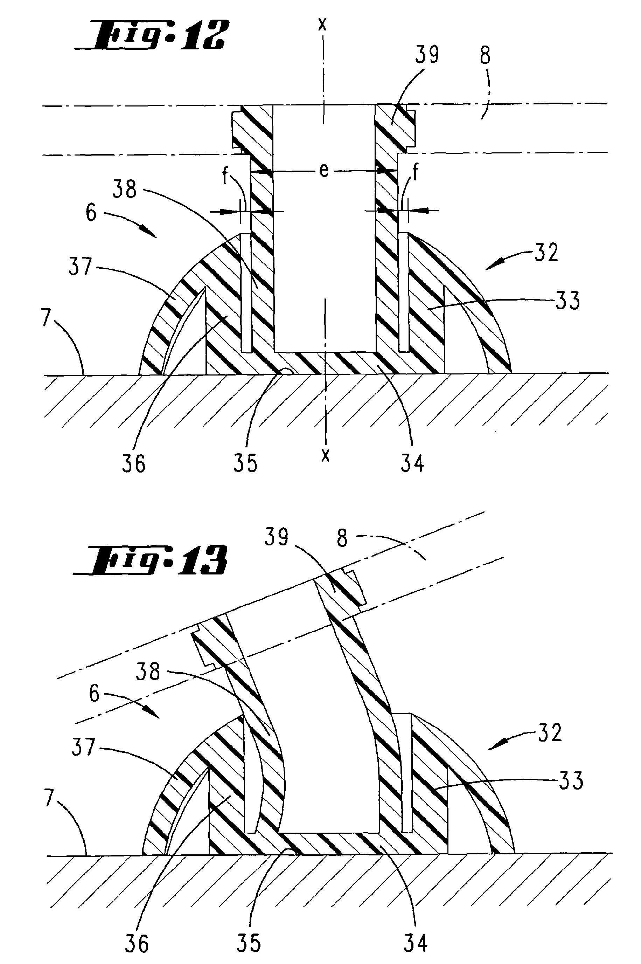

Zufolge der elastischen Eigenschaften stellt sich der Verbindungsabschnitt 38 nach Fortfall der auf diesen einwirkenden Kräfte selbsttätig in die Grundstellung gemäß Fig. 12 zurück.

### BEZUGSZEICHENLISTE

- 1: Küchenmaschine
- 2: Rührgefäß-Aufnahme
- 3: Bedienfeld
- 4: Rührgefäß
- 5: Gehäuse
- 6: Stützfuß
- 7: Tischfläche
- 8: Gehäuseboden
- 9: Fortsatz
- 10: Schalenteil
- 11: Schalenwandung
- 12: Schalenraum
- 13: Schalenboden
- 14: Dornteil
- 15: Stirnfläche
- 16: Elastomerteil
- 17: Boden
- 18: Standfläche
- 19: Mantelabschnitt
- 20: Verdickung
- 21: Ringnut
- 22: Schalendecke
- 23: Außengewinde
- 24: Schraubmutter
- 25: Scheibenteil
- 26: Standteil
- 27: Stützfläche
- 28: Ringteil
- 29: Durchtrittsöffnung
- 30: Elastomerteil
- 31: Aufnahme
- 32: Elastomerteil
- 33: Schalenteil
- 34: Schalenboden
- 35: Standfläche
- 36: Schalenwandung
- 37: Stützwandung
- 38: Verbindungsabschnitt
- 39: Anbindungsbereich

- a: Bewegungsrichtung
- b: Bewegungsrichtung
- c: Spielmaß
- d: Innendurchmesser
- e: Durchmesser
- f: Abstandsmaß

- x: Vertikalachse

## Patentansprüche

1. Standfuß (6), insbesondere für eine Tisch-Küchenmaschine (1), wobei die Küchenmaschine (1) einen nach unten abragenden, gehäuseseitigen Fortsatz (9) aufweist, der auf einem, die Standfläche (18) ausbildenden Standteil (26) aufsitzt und der Fortsatz (9) mit dem Standteil (26) über ein Elastomerteil (30) verbunden ist, wobei das Elastomerteil (30) sowohl in dem Fortsatz (9) wie in dem Standteil (26) fest verankert ist, **dadurch gekennzeichnet, dass** der Fortsatz (9) an dem Standteil (26) weiter über frei gegeneinander bewegliche Scheibenteile (25) abgestützt ist.

2. Standfuß (6) nach Anspruch 1, **dadurch gekennzeichnet, dass** ein Scheibenteil (25) als Ringteil (28) ausgebildet ist, welches Ringteil (28) das Elastomerteil (30) umgibt.

3. Standfuß (6) nach einem der Ansprüche 1 oder 2, **dadurch gekennzeichnet, dass** die Kraftabtragung vom Fortsatz (9) auf das Standteil (26) über die Scheibenteile (25) erfolgt.

4. Standfuß (6) nach einem der vorhergehenden Ansprüche, **dadurch gekennzeichnet, dass** zufolge einer Verspannung des Fortsatzes (9) gegen das Standteil (26) das Elastomerteil (30) auf Zug beansprucht ist.

## Claims

1. Base (6) in particular for a table food processor (1), the food processor (1) comprising a housing-side projection (9) that protrudes downwards and rests on a base part (26) forming the base face (18), and the projection (9) being connected to the base part (26) by an elastomer part (30), the elastomer part (30) being securely fixed both in the projection (9) and in the base part (26), **characterised in that** the projection (9) is further supported on the base part (26) by disc parts (25) which can freely move against each other.

2. Base (6) according to claim 1, **characterised in that** a disc part (25) is designed as a ring part (28), which ring part (28) surrounds the elastomer part (30).

3. Base (6) according to either claim 1 or claim 2, **characterised in that** the transfer of power is transferred from the projection (9) to the base part (26) via the disc parts (25).

4. Base (6) according to any of the preceding claims, **characterised in that** as a result of bracing the projection (9) against the base part (26), the elastomer part (30) is subjected to tensile stress.

## Revendications

1. Pied de support (6), en particulier pour un appareil ménager de table (1), dans lequel l'appareil ménager (1) présente un prolongement (9) côté boîtier saillant vers le bas, qui s'appuie sur une partie de support (26) formant la surface de support (18) et le prolongement (9) est raccordé avec la partie de support (26) via une partie d'élastomère (30), dans lequel la partie d'élastomère (30) est solidement ancrée tant dans le prolongement (9) que dans la partie de support (26), **caractérisé en ce que** le prolongement (9) s'applique encore sur la partie de support (26) via des parties à disques (25) librement mobiles l'une par rapport à l'autre.

2. Pied de support (6) selon la revendication 1, **caractérisé en ce qu'**une partie de disque (25) se présente sous la forme d'une partie annulaire (28), laquelle partie annulaire (28) entoure la partie d'élastomère (30).

3. Pied de support (6) selon l'une quelconque des revendications 1 ou 2, **caractérisé en ce que** le nivellement mécanique du prolongement (9) se fait sur la partie de support (26) via les parties de disques (25).

4. Pied de support (6) selon l'une quelconque des revendications précédentes, **caractérisé en ce que** la partie d'élastomère (30) est sollicitée à la traction à la suite de la déformation du prolongement (9) contre la partie de support (26).
